# EUROPEAN PATENT APPLICATION

(11) **EP 3 236 404 A1**
(43) Date of publication of application: **25.10.2017**
(21) Application number: 16166058.4
(22) Date of filing: 19.04.2016
(51) Int. Cl.: G06Q 20/20, G06F 3/12, G06Q 20/32, G07G 1/00, G07G 5/00, G07F 9/02, G07F 7/06, G07F 19/00, G06Q 30/02

(54) **PRINTER AND METHOD FOR OUTPUTTING TRANSACTION INFORMATION BY THE SAME**

(71) Applicant: Toshiba TEC Kabushiki Kaisha, Tokyo 141-0032 (JP)
(72) Inventor: SERIZAWA, Yasutoshi, Shinagawa-ku,, Tokyo 141-8562 (JP); OCHIAI, Takayuki, Shinagawa-ku,, Tokyo 141-8562 (JP); NISHINA, Kouji, Shinagawa-ku,, Tokyo 141-8562 (JP); IWASAKI, Fumiharu, Shinagawa-ku,, Tokyo 141-8562 (JP); SHIRAISHI, Norihisa, Shinagawa-ku,, Tokyo 141-8562 (JP); FURUYA, Eiichi, Shinagawa-ku,, Tokyo 141-8562 (JP)
(74) Representative: Takeuchi, Maya

(57) **Abstract**

A printer comprises a printing section, a communication module for near-field radio communication with a portable terminal, a reception module, a first output module and a second output module. The reception module receives transaction information from an information processing apparatus. The first output module generates electronic transaction information according to the transaction information and outputs the generated electronic transaction information to the portable terminal via the communication module if the communication module establishes the near-field radio communication with the portable terminal. The second output module generates printing data of the transaction information and prints the generated printing data by the printing section if no near-field radio communication is established by the communication module.

## Description

### FIELD

Embodiments described herein relate generally to a printer, an electronic system and a method for outputting transaction information by the printer.

### BACKGROUND

Recent years, in a well-known electronic receipt system, a receipt which is handed over from a store clerk to a customer after the settlement of a purchased commodity is completed is electronically transmitted to a customer's portable terminal. In such an electronic receipt system, as an example, a POS (Point of Sales) terminal generates a structured electronic receipt according to unstructured receipt data to upload the generated electronic receipt to a data center. A customer can browse the electronic receipt via the data center. The customer can receive an e-mail to which the electronic receipt is attached from the data center or access the data center to browse or retrieve an electronic receipt for his or her past transaction.

In the conventional electronic receipt system described above, communication fee is charged for the reception of an e-mail, or the access to a data center at the time of browsing of an electronic receipt. Thus, it is desired that the electronic receipt is received immediately after the settlement of commodities is completed as similar to the reception of a paper receipt at the store.

To solve the above problems, there is provided a printer, comprising:
a printing section configured to print data on a sheet;
a communication module configured to execute a near-field radio communication;
a reception module configured to receive transaction information from an information processing apparatus;
a first output module configured to generate electronic transaction information according to the transaction information if the communication module establishes the near-field radio communication with a portable terminal to output the generated electronic transaction information to the portable terminal via the communication module; and
a second output module configured to generate a printing data of the transaction information if no near-field radio communication is established by the communication module to print the generated printing data by the printing section.

Preferably, the printer further comprises an information reading module configured to read information relating to the owner of the portable terminal from the portable terminal if the near-field radio communication is established with the portable terminal, and an information output module configured to output the information read by the information reading module to an external device.

Preferably still, the reception module further receives, in addition to the transaction information, additional information which is added according to the information, and the first output module generates electronic additional information according to the additional information received by the reception module and outputs the electronic transaction information to which the electronic additional information is added.

Suitably, the reception module receives a receipt data including commodity information of commodities purchased in a transaction and settlement information indicating settlement of the transaction as the transaction information from a sales data processing apparatus, the first output module generates an electronic receipt data according to the receipt data and outputs the generated electronic receipt data to the portable terminal if the communication module establishes the near-field radio communication with the portable terminal, and the second output module generates a printing data of a receipt according to the receipt data and outputs the generated printing data to the printing section to print out the receipt if no near-field radio communication is established by the communication module.

Suitably yet, the near-field radio communication is a communication method conforming to an NFC standard.

The invention also relates to a method for outputting transaction information by a printer which communicates with a portable terminal with a near-field radio communication, including:
receiving transaction information from an information processing apparatus;
generating electronic transaction information according to the transaction information if the near-field radio communication is established with the portable terminal;
outputting the generated electronic transaction information to the portable terminal;
generating a print data according to the transaction information if no near-field radio communication is established with the portable terminal; and outputting the transaction information on a sheet according to the print data.

The invention further relates to an electronic receipt system comprising a printing means, comprising:
a means for communicating with a portable terminal with a near-field radio communication
a means for receiving transaction information from an information processing apparatus;
a means for generating electronic transaction information according to the transaction information if the near-field radio communication is established with the portable terminal;
a first output means for outputting the generated electronic transaction information to the portable terminal;
a means for generating a print data according to the transaction information if no near-field radio communication is established with the portable terminal; and
a second output means for outputting the transaction information on a sheet according to the print data.

Preferably still, the electronic receipt system further comprises an information reading means configured to read information relating to the owner of the portable terminal from the portable terminal if the near-field radio communication is established with the portable terminal, and an information output means configured to output the information read by the information reading module to an external device.

Preferably still, the reception means further receives, in addition to the transaction information, additional information which is added according to the information, and the first output means generates electronic additional information according to the additional information received by the reception means and outputs the electronic transaction information to which the electronic additional information is added.

Preferably yet, the reception means receives a receipt data including commodity information of commodities purchased in a transaction and settlement information indicating settlement of the transaction as the transaction information from a sales data processing apparatus, the first output means generates an electronic receipt data according to the receipt data and outputs the generated electronic receipt data to the portable terminal if the communication means establishes the near-field radio communication with the portable terminal, and the second output means generates a printing data of a receipt according to the receipt data and outputs the generated printing data to the printing section to print out the receipt if no near-field radio communication is established by the communication means.

Conveniently, the near-field radio communication is a communication method conforming to an NFC standard.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram illustrating the general structure of a POS system;
Fig. 2 is an oblique view illustrating the external appearance of a printer according to a first embodiment;
Fig. 3 is an oblique view illustrating the external appearance of a printer with an external NFC antenna;
Fig. 4 is a block diagram illustrating the functional structure of a POS terminal;
Fig. 5 is a block diagram illustrating the functional structure of the printer;
Fig. 6 is a block diagram illustrating the functional structure of a portable terminal;
Fig. 7 is a flowchart exemplifying the procedures of an electronic receipt issuing processing carried out by the printer in the first embodiment;
Fig. 8 is a block diagram illustrating the functional structure of a portable terminal according to a second embodiment;
Fig. 9 is a block diagram illustrating the functional structure of a printer;
Fig. 10 is a block diagram illustrating the functional structure of a POS terminal; and
Fig. 11 is a flowchart exemplifying the operations of an electronic receipt issuing processing executed in the second embodiment.

### DETAILED DESCRIPTION

In accordance with an embodiment, a printer comprises a printing section, a communication module for near-field radio communication with a portable terminal, a reception module, a first output module and a second output module. The printing section prints data on a sheet. The reception module receives transaction information from an information processing apparatus. The first output module generates electronic transaction information according to the transaction information and outputs the generated electronic transaction information to the portable terminal via the communication module if the communication module establishes the near-field radio communication with the portable terminal. The second output module generates printing data of the transaction information and prints the generated printing data with the printing section if no near-field radio communication is established by the communication module.

### (First Embodiment)

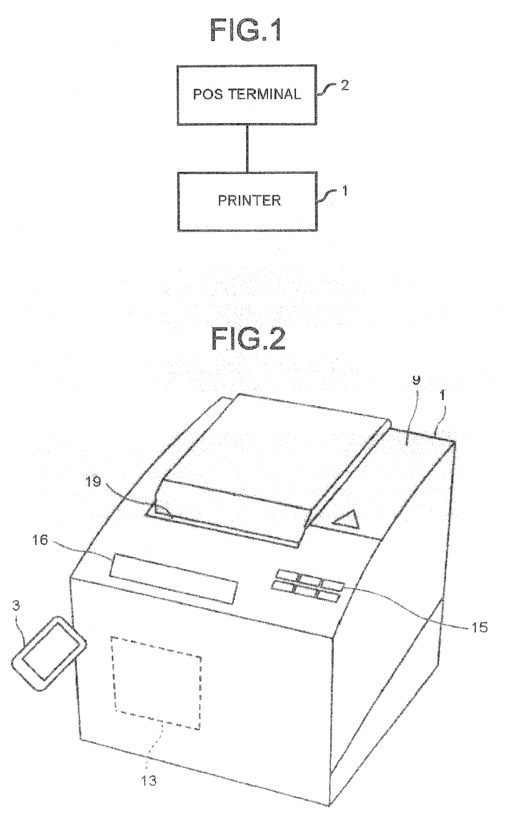

Fig. 1 is a diagram illustrating the schematic structure of a POS system. As shown in Fig. 1, a POS system arranged in a store mainly comprises a POS terminal 2 and a printer 1. The POS terminal 2 is a sales data processing apparatus for registering the sales of a commodity. The printer 1 is a receipt printer for printing a receipt and a journal. The POS terminal 2 generates receipt data in an unstructured format according to the sales information and the settlement information of commodities and outputs the receipt data and a command for instructing the printout of the receipt data to the printer 1. The printer 1 issues or outputs a paper receipt or an electronic receipt according to the receipt data received from the POS terminal 2.

Fig. 2 is an oblique view illustrating the external appearance of the printer 1 according to the first embodiment. The printer 1 has a housing 9. A receipt issuing slot 19 is arranged at the upper front side of the housing 9. An operation section 15 is arranged at the upper right side of the housing 9. A display section 16 is arranged at the upper left side of the housing 9. An NFC (Near Field radio Communication) antenna 13 is arranged inside the front panel of the housing 9. NFC-based data communication is executed between the NFC antenna 13 and a portable terminal 3 having an NFC function. Not limited to the arrangement at the foregoing exemplary position, the NFC antenna 13 may also be arranged at another location, such as an upper surface, of the housing 9. Further, the NFC antenna 13 may be separately arranged from the printer 1.

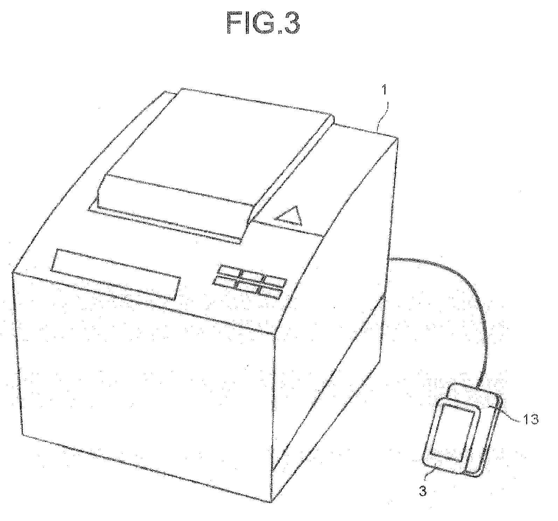

Fig. 3 is an oblique view illustrating the external appearance of the printer 1 provided with an external NFC antenna 13. As shown in Fig. 3, the NFC antenna 13 may be structured as an external module which is connected to the printer 1 through a wire.

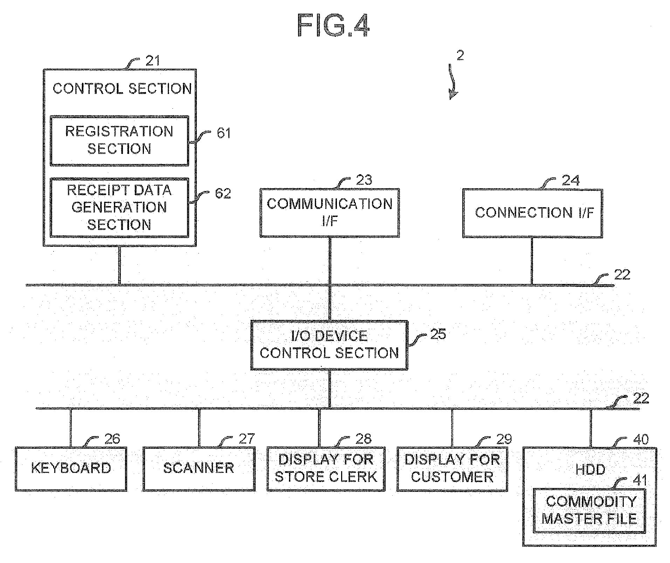

A generation processing of receipt data executed by the POS terminal 2 is described, first. Fig. 4 is a block diagram illustrating the functional structure of the POS terminal 2. As shown in Fig. 4, the POS terminal 2 includes a control section 21 consisting of, for example, a CPU (Central Processing Unit), a ROM (Read Only Memory) and a RAM (Random Access Memory). The control section 21 is connected with a communication I/F (Interface) 23 and a connection I/F 24 via a bus line 22. The control section 21 is connected with a store server via the communication I/F 23 and a network such as a LAN (Local Area Network) arranged in a store. Further, the control section 21 is connected with the printer 1 via the connection I/F 24 to execute data communication therebetween.

Further, the control section 21 is connected with devices such as a keyboard 26, a scanner 27, a display 28 for store clerk, a display 29 for customer and an HDD (Hard Disk Drive) 40 via the bus line 22 and an I/O (Input/Output) device control section 25. The control section 21 controls the input/output of each section. The keyboard 26 outputs information input corresponding to a key operation to the control section 21. The scanner 27 reads a code symbol affixed to a commodity, and decodes a commodity code encoded to the code symbol to output the decoded commodity code to the control section 21. The display 28 for store clerk may be a liquid crystal panel. The display 28 for store clerk displays a registration screen for the registration of a commodity, various kinds of error messages and the like. The display 29 for customer may be a liquid crystal panel or a line indicator. The display 29 for customer displays the names, the unit prices and the total amount of registered commodities, a change amount and a promotion message.

The HDD 40 stores programs for a sales data registration processing, a receipt data generation processing and the like. Further, the HDD 40 stores a commodity master file 41 in which commodity information such as a commodity name, a commodity code, a unit price and the like is set in association therewith.

As shown in Fig. 4, the program executed in the POS terminal 2 forms a module including a registration section 61 and a receipt data generation section 62. The CPU of the control section 21 develops the program on the RAM, which is executed to realize the functions of the foregoing sections.

The registration section 61 registers a purchased commodity according to the information received from the keyboard 26 or the scanner 27. For example, if a commodity code is received from the keyboard 26 or scanner 27, the registration section 61 reads, from the commodity master file 41, commodity information corresponding to the commodity code. Further, if the current total key on the keyboard 26 is operated, then the registration section 61 calculates the total amount of the transaction and a change amount according to an input deposited amount. The registration section 61 registers commodity information of each registered commodity in one transaction and settlement information consisting of the total amount, a deposited amount and a change amount in a sales file (not shown).

The receipt data generation section 62 generates receipt data (transaction information) according to the commodity information and settlement information registered by the registration section 61 and outputs the generated receipt data to the printer 1. The receipt data is composed of unstructured text data. Further, the commodity information of each commodity consists of, for example, the commodity name, the commodity code, the unit price and the quantity of the purchased commodity. The settlement information consists of, for example, a total amount, a total quantity, a deposited amount and a change amount relating to one transaction. Further, a receipt number, identification information (POS number) of a POS terminal 2, a company code for identifying a company running the store, a store code for identifying the store and a store clerk code for identifying the store clerk are also contained in the receipt data.

In the above-description, the transaction information at the time of purchasing a commodity refers to the transaction information of a commodity. However, the commodity is not only a visible one but also an invisible one. The transaction may be a transaction for a visible commodity or a transaction for an invisible service.

Next, the issuing processing of a paper receipt and an electronic receipt by the printer 1 is described below.

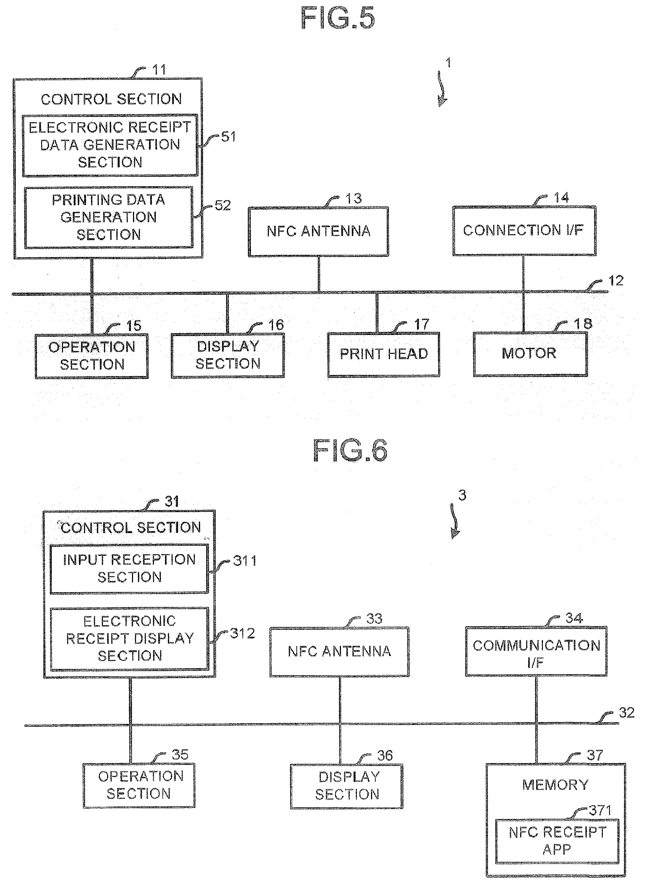

Fig. 5 is a block diagram illustrating the functional structure of the printer 1. As shown in Fig. 5, the printer 1 comprises a control section 11 consisting of a CPU, a ROM and a RAM. The programs executed by the printer 1 are stored in the ROM. The RAM serves as a working memory for developing the programs read by the CPU from the ROM. The control section 11 is connected with the NFC antenna 13 (communication module) and a connection I/F 14 via the bus line 12. Data communication is executed between the control section 11 and a device that is equipped with the NFC (e.g. the portable terminal 3 shown in Fig. 2 and Fig. 3) via the NFC antenna 13. Further, the control section 11 is connected with the POS terminal 2 via the connection I/F 14 to execute data communication via the connection I/F 14. The control section 11 and the connection I/F 14 both function as a reception module for receiving transaction information (receipt data) from the POS terminal 2.

Further, the control section 11 is connected with devices such as an operation section 15, a display section 16, a print head 17 (a printing section) and a motor 18 via the bus line 12 and various interfaces. The control section 11 controls the input/output operation of the foregoing devices.

Next, the programs executed by the printer 1 are described below. The programs executed by the printer 1 of the present embodiment are supplied as a ROM in which the programs are pre-incorporated. The programs executed by the printer 1 of the present embodiment may be recorded in a computer-readable recording medium such as a CD-ROM, an FD (Flexible Disk), a CD-R, and a DVD (Digital Versatile Disk) as installable or executable files.

Further, the programs executed by the printer 1 of the present embodiment may be stored in a computer connected with a network such as the Internet and may be provided through the network with a download operation. Alternatively, the programs executed by the printer 1 of the present embodiment may be provided or distributed via a network such as the Internet.

As shown in Fig. 5, the programs executed in the printer 1 form modular structures including an electronic receipt data generation section 51 and a printing data generation section 52. The CPU of the control section 11 realizes the functions of the foregoing sections by executing the programs.

If the NFC antenna 13 establishes a near field radio communication with the portable terminal 3 having the NFC, then the electronic receipt data generation section 51 (first output module) generates electronic receipt data.

The electronic receipt data, which is not limited in data structure, may consist of, for example, data (a structured file or document) in a structured format such as an XML or CSV. In this case, the electronic receipt data generation section 51 converts the unstructured receipt data received from the POS terminal 2 to structured data to generate electronic receipt data. More specifically, the electronic receipt data generation section 51 converts receipt data to electronic receipt data according to a predetermined conversion rule. For example, the conversion rule defines the specific elements constituting receipt data and attribute information (e.g. tag) indicating attribute of the element. The electronic receipt data generation section 51 generates structured electronic receipt data (electronic transaction information) by structuring each element of receipt data (transaction information) with corresponding attribute information. After being converted to a structured format, the elements contained in electronic receipt data can be used effectively.

Further, the data structure of the electronic receipt data is not limited to the above. As another example, the electronic receipt data may consist of image data in a PDF (Portable Document Format). Further, the electronic receipt data may consist of texts and images in a mixture form. As an example, the electronic receipt data may consist of text data indicating transaction information and image data indicating a logotype such as a store name.

The electronic receipt data generation section 51 sends the generated electronic receipt data to the portable terminal 3 through the NFC antenna 13.

Transaction information is exemplified herein by receipt data indicating the content of a transaction for commodities (or a service) purchased in a store. However, other application examples of transaction information and electronic transaction information are described later in other embodiments.

The printing data generation section 52 (second output module) determines that no electronic receipt is received if a specific period of time elapses in a state that no NFC connection is established by the NFC antenna 13 after the printing data is received from the POS terminal 2, and then starts the issuing of a paper receipt. The printing data generation section 52 generates printing data of a receipt (data in a print image) according to the receipt data received from the POS terminal 2. Moreover, the printing data generation section 52 outputs the generated printing data to the print head 17 and instructs the print head 17 to print a paper receipt.

The print head 17 prints the print image of a receipt on a rolled receipt paper according to the printing data input from the printing data generation section 52. The motor 18 feeds the receipt paper towards the receipt issuing slot 19 (refer to Fig. 2). A cutter (not shown) arranged at the receipt issuing slot 19 cuts off the receipt paper corresponding to a print length, and the operator of the POS terminal 2 hands over the cut paper receipt to the customer.

Next, the NFC reception processing and display processing of an electronic receipt in the portable terminal 3 is described below.

Fig. 6 is a block diagram illustrating the functional structure of the portable terminal 3. The portable terminal 3 having an NFC function is a smart phone, a mobile phone, a PDA (Personal Digital Assistant), tablet computer or the like. As shown in Fig. 6, the portable terminal 3 comprises a control section 31 consisting of a CPU, a ROM and a RAM. The control section 31 is connected with an NFC antenna 33, a communication I/F 34, an operation section 35, a display section 36 and a memory 37 via a bus line 32.

The control section 31 executes data communication with the printer 1 via the NFC antenna 33. For example, the NFC antenna 33 receives the electronic receipt data generated by the printer 1 in the same way as described above. The control section 31 can be connected with a public telecommunication network via the communication I/F 34. The display section 36 is a display device such as a liquid crystal display. The operation section 35 is an input device such as operational keys or the touch panel arranged on a liquid crystal display. The memory 37 is a nonvolatile memory. A user of the portable terminal 3 downloads an NFC receipt APP (application program) 371 for electronic receipt management from a download website and installs the NFC receipt APP 371 on the memory 37.

The NFC receipt APP 371 is an application software for collectively managing the electronic receipts received through the NFC. The electronic receipt data received from the printer 1 is collectively stored in a data storage area for the NFC receipt APP 371. By starting the NFC receipt APP 371, the user of the portable terminal 3 can simply perform a list display or a selective display, in which receipts are selectively displayed by transaction date or transaction store, with respect to the electronic receipts received through the NFC.

The NFC receipt APP 371, which is not essential, may be replaced by a common document file management APP, file browsing APP, data editing APP, image browsing APP or Web browser which is installed on the portable terminal 3 or a conventional electronic receipt related APP to display the electronic receipt received through the NFC.

The CPU of the control section 31 executes the program stored in the ROM, or the NFC receipt APP 371 stored in the memory 37, which is developed on the RAM to function as an input reception section 311 and an electronic receipt display section 312.

The input reception section 311 receives each input from the operation section 35 through a GUI (Graphical User Interface) on a screen displayed by the display section 36. The input is realized through a key operation on a software keyboard or a hand writing input or voice input, but not limited to a specific method.

The electronic receipt display section 312 reads the electronic receipt data stored in the data storage area for the NFC receipt APP 371 to display the image of an electronic receipt on the display section 36 in response to the reception of an input by the input reception section 311. For example, the electronic receipt display section 312 first displays a list screen on which the electronic receipts are displayed and then displays, in response to the selection operation received by the input reception section 311 on the list screen, the image of the selected electronic receipt. Alternatively, the electronic receipt display section 312 displays a retrieval screen for retrieving a reception date or reception store of the electronic receipts. Moreover, if a retrieval condition is received by the input reception section 311 from the retrieval screen, then the electronic receipt display section 312 displays a list of the titles of the electronic receipts according to the result of the retrieval.

The electronic receipt is not necessarily displayed matching with the image of the receipt printed on a receipt paper. However, as a substitute of a paper receipt, an electronic receipt is used to prove the purchase of commodities and the reception of a payment at the store. Thus, the electronic receipt is desired to contain necessary information as a receipt including a store name, a purchase date and time, details of purchased commodities, a total sales amount, a deposited amount, a change amount, a receipt number and a transaction number.

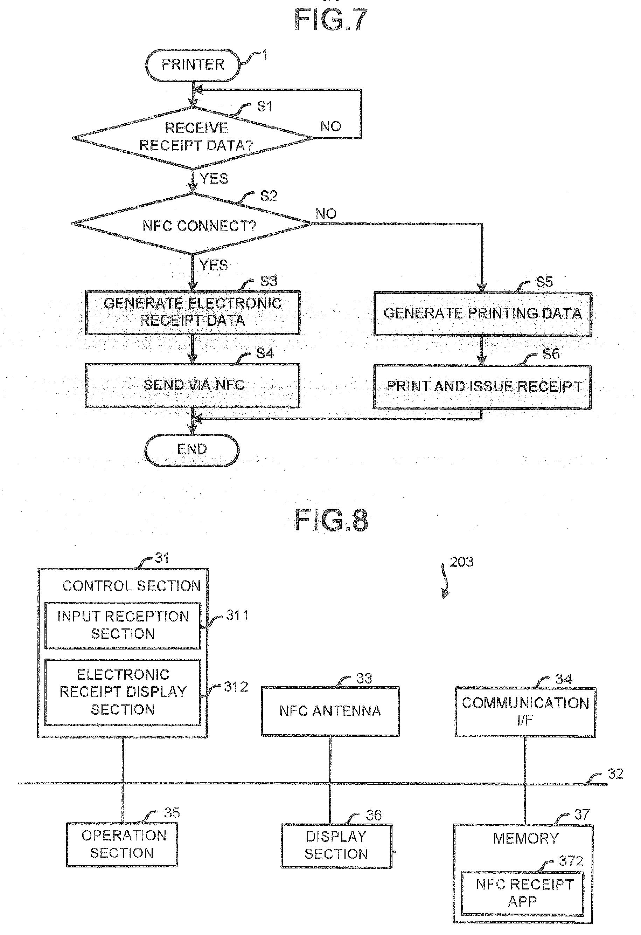

Next, the operations carried out by the printer 1 to issue a receipt are described below. Fig. 7 is a flowchart exemplifying the operations carried out by the printer 1 in an electronic receipt issuing processing in the first embodiment.

The control section 11 of the printer 1 determines whether or not receipt data is received from the POS terminal 2 (Act S1). If receipt data is received (Act S1: Yes), Act S2 is taken. If receipt data is not received (Act S1: No), the control section 11 keeps waiting in Act S1. Sequentially, if an NFC connection is established between the NFC antenna 13 and the portable terminal 3 (Act S2: Yes), the electronic receipt data generation section 51 generates electronic receipt data according to the receipt data received from the POS terminal 2 in Act S1 (Act S3). Then the electronic receipt data generation section 51 sends the electronic receipt data generated in Act S3 to the portable terminal 3 via the NFC antenna 13 (Act S4).

On the other hand, if no NFC connection is established by the NFC antenna 13 even if a specific period of time elapses after the receipt data is received (Act S2: No), then the printing data generation section 52 generates printing data of a receipt according to the receipt data received from the POS terminal 2 in Act S1 (Act S5). Then, the printing data generation section 52 outputs the printing data generated in Act S5 to the print head 17 and then instructs the print head 17 to issue a paper receipt (Act S6). The print head 17 prints a paper receipt using the printing data received and then cooperates with the motor 18 to issue the paper receipt from the receipt issuing slot 19.

Thus, if an NFC connection is established, then the printer 1 of the first embodiment generates electronic receipt data and sends the electronic receipt data to the portable terminal 3 through the NFC. On the other hand, if no NFC connection is established, then the printer 1 generates printing data of a receipt and issues a paper receipt. As a result, according to the first embodiment, the information relating to a transaction can be simply transferred without intervening the data center even if the information is supplied to the user as electronic data.

In the past, generally, a software installed in a POS terminal is developed for a dedicated use for an individual store and thus it is often the case that various kinds of software are produced for various stores, such as for companies which collectively operate chain stores, or self-employed stores (private stores). Each store benefits from the dedicated software for the store on the one hand, but the various kinds of software hinder the spread of an electronic receipt system on the other hand.

To spread an electronic receipt, development of the dedicated electronic receipt software is required for the POS terminals of each company or store. Further, the initial cost of the electronic receipt is increased at the store if it is needed to introduce afresh a POS terminal equipped with the software, and thus, there is an anxiety in which it may be hard to spread the electronic receipt even if the software for POS terminals is developed.

Contrarily, according to the present embodiment, the POS terminal 2 is not equipped with functions relating to the electronic receipt while the printer 1 generates electronic receipt data. Thus, it is not needed to purchase a new POS terminal or set up a data center, which reduces the introducing cost of the electronic receipt and consequentially facilitates the spread of the electronic receipt at stores.

### (Second Embodiment)

It is described in the first embodiment that electronic receipt data is output from the printer to the portable terminal through the NFC if the NFC connection is established. In the second embodiment, customer information (individual information) is read by the printer from the portable terminal after the NFC connection is established.

First, the application program installed in a portable terminal 3 according to the second embodiment is described. Fig. 8 is a block diagram illustrating the functional structure of a portable terminal 203 according to the second embodiment. Identical components shown in Fig. 8 and Fig. 6 are denoted by the same reference numerals and therefore the descriptions thereof are not repeated.

An NFC receipt APP 372 according to the second embodiment is installed in the memory 37 of the portable terminal 203. In addition to the functions of the NFC receipt APP 371 according to the first embodiment, the NFC receipt APP 372 also has a function of pre-registering the customer information which is delivered to a store through the NFC. A user of the portable terminal 203 can download the NFC receipt APP 372 to his or her portable terminal 203 by accessing a Web page on which the NFC receipt APP 372 is provided through a download site of an internet.

If the NFC receipt APP 372 is started, the electronic receipt display section 312 displays an APP (application) screen for the NFC receipt APP 372 on the display section 36. A GUI is arranged on the APP screen to receive input of individual information of a user such as a name, age, gender, post address, e-mail address and the like. The input reception section 311 stores the individual information received to each input column in a memory which can be accessed with the NFC. The memory serving as a storage destination may be a part of the memory 37 or may be located in a secure element attached to the NFC antenna 33.

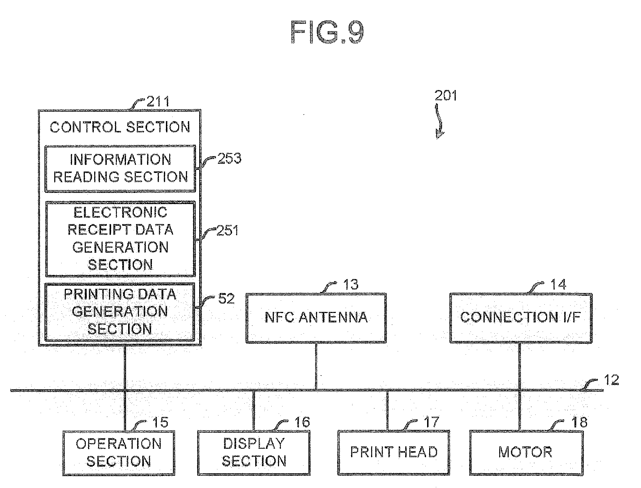

Next, a printer 201 according to the second embodiment is described below. Fig. 9 is a block diagram illustrating the functional structure of the printer 201. As shown in Fig. 9, the programs executed by the printer 201 has modular structures including an information reading section 253, an electronic receipt data generation section 251 and a printing data generation section 52. Moreover, by executing the programs, the control section 211 of the printer 201 realizes the functions of the information reading section 253, the electronic receipt data generation section 251 and the printing data generation section 52. Identical components shown in Fig. 9 and Fig. 5 are denoted by the same reference numerals and therefore the descriptions thereof are not repeated.

If the NFC connection is established between the NFC antenna 13 and the portable terminal 203, then the information reading section 253 (information reading module) reads customer information from his or her portable terminal 203.

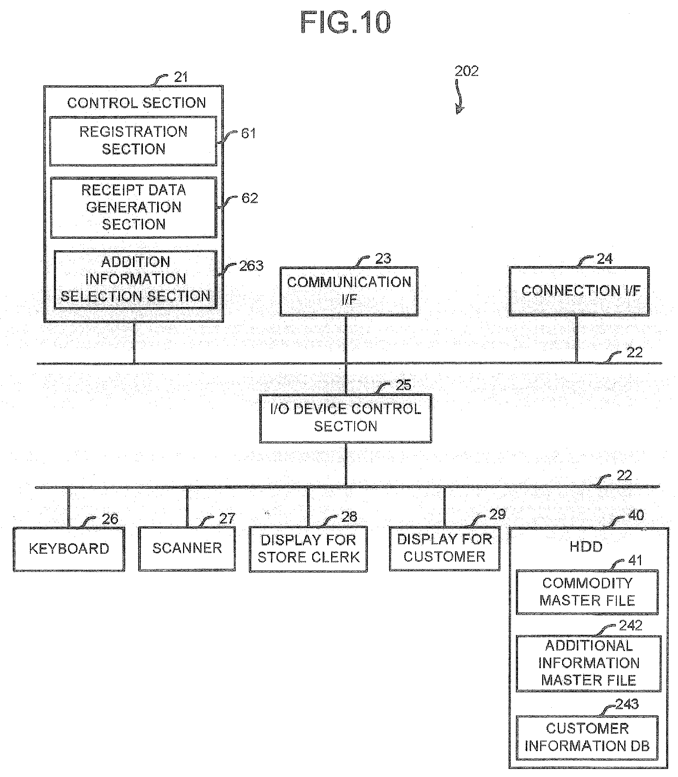

The electronic receipt data generation section 251 (additional information inquiry module) sends the customer information read by the information reading section 253 to a POS terminal 202 (refer to Fig. 10) to inquire about additional information added to an electronic receipt. The electronic receipt data generation section 251 functions as an information output module which outputs customer information to the POS terminal 202. The electronic receipt data generation section 251 adds the additional information received from the POS terminal 202 to the receipt data to generate electronic receipt data. Further, the electronic receipt data generation section 251 sends the generated electronic receipt data to the portable terminal 203 via the NFC antenna 13.

In the above description, the customer information is output to the POS terminal 202 from the electronic receipt data generation section 251. However, the output destination of the customer information is not limited to the above. The output destination of the customer information may be another external device, another external server (e.g. a store server, or the server of a company or a manufacturer) or a service on a network.

Sequentially, the POS terminal 202 according to the second embodiment is described below. Fig. 10 is a block diagram illustrating the functional structure of the POS terminal 202. As shown in Fig. 10, in addition to the commodity master file 41, the HDD 40 further stores an additional information master file 242 and a customer information DB (Database) 243. Further, the program executed by the POS terminal 202 has a modular structure including a registration section 61, a receipt data generation section 62 and an additional information selection section 263. Identical components between the POS terminal 2 of the first embodiment and the POS terminal 202 of the second embodiment are denoted by the same reference numerals and therefore the descriptions thereof are not repeated.

Additional information added to the electronic receipt handed over to a customer is registered in the additional information master file 242 according to the customer information. For example, the sales information of a store and information indicating a coupon usable in the store are added to the electronic receipt as the additional information. As an example of the registration in the additional information master file 242, ' Woman in her 30s' is registered as a target to which information is added, and data indicating a coupon usable for a specific commodity is registered as information added to the electronic receipt given to the target.

The customer information DB 243 is a database used by a store to collect the customer information read from the portable terminal 203.

The additional information selection section 263 selects additional information from the additional information master file 242 according to the inquiry of the additional information by the electronic receipt data generation section 251 of the printer 201 and sends the selected additional information to the printer 201 as a response. Further, the additional information selection section 263 registers the customer information received from the printer 201 in the customer information DB 243. Therefore, the store can collect customer information when issuing an electronic receipt. Thus, the store which introduces the printer 201 can use the customer information for a sales analysis or a sales promotion such as a Direct Mail advertisement.

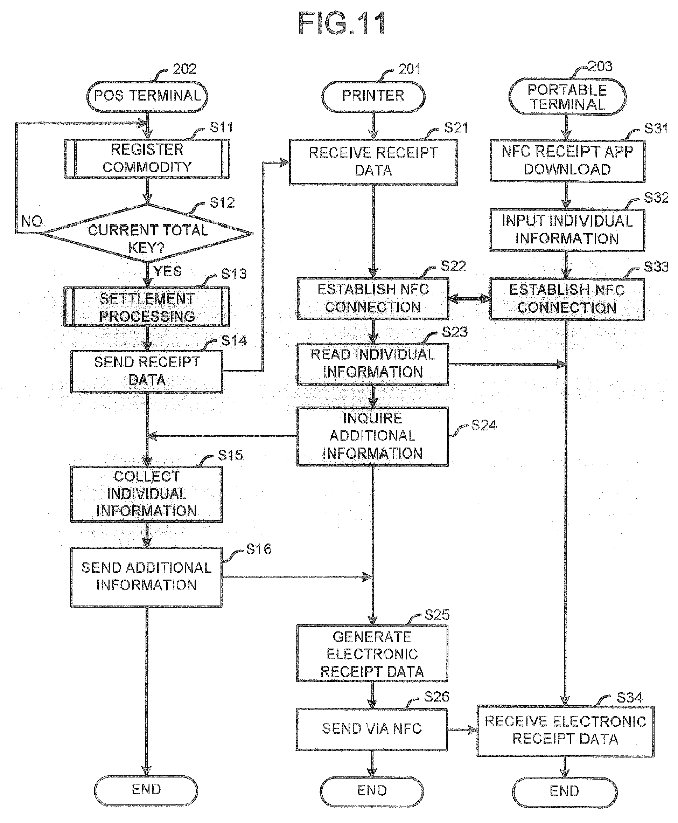

Next, an example of the operations carried out in the second embodiment to issue electronic receipt data are described below. A paper receipt is issued in the second embodiment in the same way as described in the first embodiment and is therefore not described. Fig. 11 is a flowchart exemplifying the operations carried out in the second embodiment to issue an electronic receipt.

First, the user of the portable terminal 203 registers individual information in the NFC receipt APP 372 prior to the purchase of a commodity in a store. Specifically, the control section 31 of the portable terminal 203 accesses the foregoing download site to download the NFC receipt APP 372 and installs the downloaded NFC receipt APP 372 in the portable terminal 203 (Act S31). The user of the portable terminal 203 starts the NFC receipt APP 372 to input the name, the age (generation), the gender and the e-mail address of the user through an individual information input screen (Act S32).

Next, the operations of a settlement processing carried out in the store are described. The registration section 61 of the POS terminal 202 carries out the registration processing for each commodity according to the information input from the keyboard 26 or scanner 27 (Act S11). The processing in Act S11 is carried out continuously until the current total key is operated (Act S12: No). If the current total key is operated (Act S12: Yes), then the registration section 61 carries out the settlement processing to calculate a total amount and a change amount according to a deposited amount (Act S13). The receipt data generation section 62 generates receipt data including commodity information and settlement information and then sends the receipt data, together with a receipt issuing instruction, to the printer 201 (Act S14).

The electronic receipt data generation section 251 of the printer 201 receives the receipt data from the POS terminal 202 (Act S21). Then, the NFC antenna 33 of the portable terminal 203 approaches the NFC antenna 13 of the printer 201 to establish an NFC connection therebetween (Act S22, Act S33). The information reading section 253 of the printer 201 reads the individual information registered in the receipt APP 372 in Act S32 from the portable terminal 203 through the NFC (Act S23). Sequentially, the electronic receipt data generation section 251 of the printer 201 inquires of the POS terminal 202 about additional information using the individual information read in Act S23 (Act S24).

The additional information selection section 263 of the POS terminal 202 collects the individual information received from the printer 201 and registers the collected individual information in the customer information DB 243 (Act S15). Further, the additional information selection section 263 reads, from the additional information master file 242, additional information corresponding to the inquired individual information and sends the additional information to the printer 201 as a response (Act S16).

The electronic receipt data generation section 251 of the printer 201 generates electronic receipt data according to the additional information received in Act S16 and the receipt data received in Act S21 (Act S25). The electronic receipt data generation section 251 sends the generated electronic receipt data to the portable terminal 203 via the NFC antenna 13 (Act S26).

The control section 31 of the portable terminal 203 receives the electronic receipt data via the NFC antenna 33 and stores the received electronic receipt data in a memory area for the NFC receipt APP 372 (Act S34). By starting the NFC receipt APP 372, the user of the portable terminal 203 can browse the electronic receipt data received from the printer 201. If additional information such as a coupon is added to the electronic receipt data, then the user can prompt a display screen of the electronic receipt at the time of settlement to receive a service such as a discount.

Thus, according to the printer 201 in the second embodiment, in addition to the effect in the first embodiment, the printer 201 of the second embodiment has a function for collecting customer information from the portable terminal 203 of the customer at the time an electronic receipt is transferred. In this way, the store can use the collected customer information in a promotion activity and the like.

Further, according to the printer 201 of the second embodiment, an electronic receipt is generated such that additional information according to the collected customer information is added to the electronic receipt and then the generated electronic receipt is sent to the portable terminal 203. Consequentially, with the portable terminal 203, the customer can confirm a promotion message and a coupon through the portable terminal 203 without considering time and place. Further, since only the portable terminal 203 on which a coupon is displayed is held over to the store clerk at the time the coupon service is received, the customer is not required to carry the coupon printed on the paper and thus the coupon service can be easily utilized.

Further, it is exemplified above that the printer 201 generates an electronic receipt to which additional information is added according to the receipt data and the additional information (coupon information or sales information); however, the present embodiment is not limited to this arrangement. As another example, receipt data to which additional information is added may be generated by the POS terminal 202 on the one hand, and electronic receipt data to which additional information is added (e.g. an electronic receipt with a coupon) may be generated by the printer 201 according to the receipt data sent from the POS terminal 202 on the other hand.

Further, it is described above that the electronic receipt is generated in such a manner that the additional information such as coupon information or sales information is added in electronic receipt data, however, the data structure of an electronic receipt is not limited to this structure. An electronic receipt and electronic additional information (e.g. an electronic coupon and an electronic advertisement) may be separately generated as individual data and then separately output through the NFC.

### (Other Embodiments)

It is described above that as an example of the near-field radio communication, electronic receipt data is sent or received according to an NFC standard; however, a near-field radio communication function according to another standard is applicable. For example, a near-field radio communication function based on another standard such as Transfer Jet (registered trademark), Bluetooth (registered trademark) or iBeacon (registered trademark) is also applicable.

Further, printers 1 and 201 connected with the POS terminal 2 located in the store are described above as the printer according to the present embodiment; however, the present embodiment is not limited to these arrangement. Other application examples are schematically described below.
(1) Application example of printer for a cash handling apparatus:
   As another application example, the foregoing embodiments may be applied to a printer built in an ATM (Automated Teller Machine) or a printer externally connected with an ATM. Specifically, an NFC antenna is internally arranged or externally connected with a printer for ATM. Moreover, if an NFC connection is established as a portable terminal approaches the NFC antenna, then the control section (processor) of the printer for ATM structures the transaction detail information received from the ATM to generate data of an electronic transaction detail slip, and sends the generated data of the electronic transaction detail slip to the portable terminal. In other words, the transaction detail information can be converted into the electronic transaction detail slip in a data format displayable to the portable terminal. On the other hand, if no NFC connection is established within a specific period of time, then the printer for ATM generates printing data of the transaction detail slip and then prints a paper transaction detail slip to issue it. The transaction detail information refers to information indicating a reception amount (deposit amount), a payment amount (withdrawal amount), a remittance amount, the balance of an account and the content of a transaction through the ATM.
   Further, in such an embodiment, the control section of the printer for ATM may determine whether or not the account holder is the owner of the portable terminal (identity). As an example, identification information (I.D.) of the owner of the portable terminal, such as a name, a telephone number, an account number and the like is stored in a secure element of the portable terminal in advance. Further, It is arranged that the identification information described above is stored in the ATM in advance or can be referred to through the communication with an external server. Then, the control section of the printer for ATM reads the identification information from the portable terminal and compares the customer who is identified according to the identification information with a customer who is specified according to the transaction detail information received from the ATM. If the result of the comparison is positive, then the control section of the printer for ATM generates an electronic transaction detail slip according to the transaction detail information and sends the generated electronic transaction detail slip to the portable terminal through the NFC. On the other hand, if the result of the comparison is negative, then the printer for ATM outputs an error message and then issues a paper transaction detail slip in the conventional way. As another way, if the identity between the identification information from the portable terminal and the identification information from the ATM is denied, then the issuing of a paper transaction detail slip may be prevented.
   In this way, in a case also in which the foregoing embodiments are applied to a printer for ATM having an NFC function, transaction detail information can be delivered to the user by automatically selecting either of a printed data and an electronic data. Therefore, the electronic transaction detail slip can enhance the convenience for customer, and meanwhile, the printed transaction detail slip can achieve the satisfaction of customer who wants to receive a paper transaction detail slip, as similar to the conventional way.
(2) Application example of printer for empty container recovery machine:
   As another application example, the foregoing embodiments may be applied to a recovery machine which recycles empty containers such as beverage bottles and prints a deposit-refund fee or a point to be added according to a recovery amount on a receipt and then issues the receipt. The recovery machine including a printer to which the NFC antenna is mounted or connected is used. If an NFC connection is established between the printer and the portable terminal, then the printer generates electronic receipt data by structuring transaction information consisting of the type and the quantity of empty containers and a deposit-refund fee or points to send the generated electronic receipt data to the portable terminal. On the other hand, if no NFC connection is established, then the printer generates the printing data according to the transaction information to issue a paper receipt, as similar to the conventional way.
(3) Application example of printer for a deposit machine for depositing (charging) electronic money:
   Generally, electronic money can be deposited into an IC card with the use of an ATM installed in a station or a kiosk terminal and a multi-function ticket dispenser installed in a convenience store, a supermarket, a shopping mall or a station. Thus, it may be arranged that the printer of the foregoing embodiments is also applied to such an electronic money deposit machine to output an electronic receipt as well as a paper receipt. The electronic money deposit machine including a printer to which the NFC antenna is mounted or connected is used. If an NFC connection is established between the printer and the portable terminal, then the printer generates electronic receipt data (electronic use-detail slip data) by structuring transaction information consisting of a charging amount, a type of electronic money and an identifier of a reception destination (e.g. electronic money ID). The generated electronic receipt data is sent to the portable terminal through the NFC. On the other hand, if no NFC connection is established, then the printer generates printing data of the use-detail slip according to the transaction information to issue a paper receipt (use-detail slip), as similar to the conventional way.
(4) Technical combination with conventional electronic receipt system:
   The printers 1 and 201 may send the generated electronic receipt data to the POS terminals 2 and 202. The POS terminals 2 and 202 may send the received electronic receipt data to an electronic receipt management server which manages electronic receipt data in the conventional electronic receipt system. The electronic receipt management server sends an electronic receipt and various display data to the portable terminal 3 in response to a browse request sent from the conventional electronic receipt APP installed in the portable terminal 3 of the user.

In the above-described embodiment, the customer can add an electronic receipt which is once received through the NFC to a list-display with the conventional electronic receipt APP, and thus can collectively manage the transaction records (transaction history). It is possible for a store to construct an electronic receipt system in such a manner that the store purchases printers 1 and 201 first to introduce the electronic receipt system in a simplified manner, and then introduces a system which incorporates with an electronic receipt management server after a prospect of success can be seen. Therefore, the store can realize the advantage of the electronic receipt system while reducing the initial investment cost.

As stated above, according to the foregoing embodiments, electronic transaction information is generated by a printer according to the transaction information received from a POS terminal and then the generated electronic transaction information is output through the NFC. Thus, according to the foregoing embodiments, information relating to a transaction can be simply delivered to a customer even if the information is provided to the customer as an electronic data.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and spirit of the invention.

## Claims

1. A printer, comprising:
a printing section configured to print data on a sheet;
a communication module configured to execute a near-field radio communication;
a reception module configured to receive transaction information from an information processing apparatus;
a first output module configured to generate electronic transaction information according to the transaction information if the communication module establishes the near-field radio communication with a portable terminal to output the generated electronic transaction information to the portable terminal via the communication module; and
a second output module configured to generate a printing data of the transaction information if no near-field radio communication is established by the communication module to print the generated printing data by the printing section.

2. The printer according to claim 1, further comprising an information reading module configured to read information relating to the owner of the portable terminal from the portable terminal if the near-field radio communication is established with the portable terminal, and an information output module configured to output the information read by the information reading module to an external device.

3. The printer according to claim 1 or 2, wherein the reception module further receives, in addition to the transaction information, additional information which is added according to the information, and the first output module generates electronic additional information according to the additional information received by the reception module and outputs the electronic transaction information to which the electronic additional information is added.

4. The printer according to any one of claims 1 to 3, wherein the reception module receives a receipt data including commodity information of commodities purchased in a transaction and settlement information indicating settlement of the transaction as the transaction information from a sales data processing apparatus, the first output module generates an electronic receipt data according to the receipt data and outputs the generated electronic receipt data to the portable terminal if the communication module establishes the near-field radio communication with the portable terminal, and the second output module generates a printing data of a receipt according to the receipt data and outputs the generated printing data to the printing section to print out the receipt if no near-field radio communication is established by the communication module.

5. The printer according to any one of claims 1 to 4, wherein the near-field radio communication is a communication method conforming to an NFC standard.

6. A method for outputting transaction information by a printer which communicates with a portable terminal with a near-field radio communication, including:
receiving transaction information from an information processing apparatus;
generating electronic transaction information according to the transaction information if the near-field radio communication is established with the portable terminal;
outputting the generated electronic transaction information to the portable terminal;
generating a print data according to the transaction information if no near-field radio communication is established with the portable terminal; and
outputting the transaction information on a sheet according to the print data.

7. An electronic receipt system comprising a printing means, comprising:
a means for communicating with a portable terminal with a near-field radio communication
a means for receiving transaction information from an information processing apparatus;
a means for generating electronic transaction information according to the transaction information if the near-field radio communication is established with the portable terminal;
a first output means for outputting the generated electronic transaction information to the portable terminal;
a means for generating a print data according to the transaction information if no near-field radio communication is established with the portable terminal; and
a second output means for outputting the transaction information on a sheet according to the print data.

8. The electronic receipt system according to claim 7, further comprising an information reading means configured to read information relating to the owner of the portable terminal from the portable terminal if the near-field radio communication is established with the portable terminal, and an information output means configured to output the information read by the information reading module to an external device.

9. The electronic receipt system according to claim 7 or 8, wherein the reception means further receives, in addition to the transaction information, additional information which is added according to the information, and the first output means generates electronic additional information according to the additional information received by the reception means and outputs the electronic transaction information to which the electronic additional information is added.

10. The electronic receipt system according to any one of claims 7 to 9, wherein the reception means receives a receipt data including commodity information of commodities purchased in a transaction and settlement information indicating settlement of the transaction as the transaction information from a sales data processing apparatus, the first output means generates an electronic receipt data according to the receipt data and outputs the generated electronic receipt data to the portable terminal if the communication means establishes the near-field radio communication with the portable terminal, and the second output means generates a printing data of a receipt according to the receipt data and outputs the generated printing data to the printing section to print out the receipt if no near-field radio communication is established by the communication means.

11. The electronic receipt system according to any one of claims 7 to 10, wherein the near-field radio communication is a communication method conforming to an NFC standard.
